# EUROPEAN PATENT SPECIFICATION

(11) **EP 3 088 623 B1**
(45) Date of publication and mention of the grant of the patent: **19.09.2018**
(21) Application number: 15165978.6
(22) Date of filing: 30.04.2015
(51) Int. Cl.: E04B 1/76, F16B 13/14

(54) **FIXING SYSTEM OF LIGHTWEIGHT LOADS ON INSULATING COATINGS OF EXTERNAL WALLS IN BUILDINGS**
BEFESTIGUNGSSYSTEM VON LEICHTEN LASTEN AUF ISOLIERENDER BESCHICHTUNG VON AUSSENWÄNDEN BEI GEBÄUDEN
SYSTÈME DE FIXATION DES CHARGES LÉGÈRES SUR DES REVÊTEMENTS ISOLANTS DE MURS EXTÉRIEURS DE BÂTIMENTS

(43) Date of publication of application: 02.11.2016
(73) Proprietor: I.Quattro S.r.l., 60030 San Marcello (AN) (IT)
(72) Inventor: Cirilli, Alessandro, 60035 JESI (AN) (IT)
(74) Representative: Baldi, Claudio

(56) References cited:
- EP-A2- 1 331 406
- CH-A5- 668 286
- DE-U1- 29 617 495
- "Dosteba - Shutter catch element K1-PH", , 5 January 2014 (2014-01-05), XP054975627, Retrieved from the Internet: URL:https://www.youtube.com/watch?v=jnLIAJ 3jRL4 [retrieved on 2014-12-04]

## Description

The present invention relates to a fixing system of lightweight loads on insulating coatings of external walls in buildings.

Two types of coating systems for an external wall of a building are known in the building industry: the ventilated wall system and the cladding system.

The ventilated wall system generally comprises:
- insulating panels applied on the external surface of the wall,
- anchoring brackets fixed to the wall, and
- coating plates supported by the anchoring brackets in such manner to generate an air ventilation chamber between the insulating panels and the coating plates.

In the cladding system, instead, the anchoring brackets and the coating plates are replaced by a plastic mesh applied on the insulating panels fixed to the wall. The mesh favors the adhesion and the stability of the layer of mortar used for the surface finishing plaster.

It must be considered that insulating panels are generally made of polyurethane foam or other soft synthetic materials with thermo-insulating properties. Therefore, in the case of cladding, problems are encountered when fixing to the wall the supporting means used to support lightweight loads, such as for example the hinges of a window shutter. In fact, the cladding composed of insulating panel, mesh and plaster is not able to firmly and safely hold the anchoring screws of the said hinges, compared to concrete or traditional bricks.

In order to solve such a problem blocks are known, which are inserted as plugs in the cladding and are intended to being anchored to the masonry wall of the building by means of ordinary fixing screws.

Two different types of devices are currently found on the market in order to fix the hinges of window shutters.

The first type of device is sold and marketed by Dosteba and is known as "shutter catch element K1-PH". Such a device consists in a plastic molded monolithic block, preferably made of polyurethane foam, which integrates a steel plate for wall fixing and an aluminum plate whereon a threaded hole is made in order to screw the supporting screw of the shutter hinge.

More precisely, after positioning and centering the shutter with respect to the window, the operator must drill a hole in the predefined position on the block, which has been previously fixed to the wall and concealed under the surface plaster. The hole is made with a drill provided with a self-tapping bit in order to obtain a threaded hole on the aluminum plate of the block. In fact, the aluminum plate is the only part of the block that can provide a safe, resistant and reliable fixation of the screw of the shutter hinge.

The drawback of this first type of device occurs during the drilling operation of the aluminum plate, because the aluminum shavings easily tend to stick to the drill bit, impairing the correct formation of a thread in the hole of the aluminum plate.

In order to solve this drawback, a second type of fixing device for hinges is known, which comprises a monolithic plastic block provided with a threaded hole, obtained during the molding process, used by the operator for screwing the screw of the shutter hinge. In such a case, blocks molded from a hard, resistant plastic material are used, which are provided with a threaded hole suitable for providing a reliable and solid fixation to the fixing screw of the shutter hinge.

However, the provision of a pre-formed threaded hole for mounting the shutter hinge is the cause of another problem, which occurs when the said blocks are fixed to the masonry wall. In fact, the positioning of the blocks must strictly comply with the center-to-center distance, both in vertical and horizontal direction, of all shutter hinges; otherwise it will be impossible to mount the shutter or to obtain the perfect alignment and the precise stop of the shutter panels when closing.

Being aware of the latter problem, the said second model of blocks is sold together with a disposable mounting kit which consists in a rectangular frame. The uprights of the said frame are used by the operator to temporarily support the blocks in order to fix them onto the wall at the correct height and with the correct center-to-center distance of the holes. After fixing the blocks firmly to the wall, the mounting kit is disposed of, and then the screws of the shutter hinges are screwed in the holes of the blocks.

Evidently, also this second type of blocks is not completely satisfactory for the operator in charge of installing the shutters on a building provided with insulating coating because of the time wasted to position the mounting frame on the wall and the blocks on the uprights of the mounting frame.

Moreover, it must be considered that the both the "shutter catch element K1-PH" and the hard plastic device with pre-formed hole are not versatile and cannot adjust to different thicknesses of the coating. In view of the above, it is necessary to stock various sizes of fixing devices according to the thickness of the coating to be obtained.

EP1331406 discloses a system used to fix an anchoring screw to a hollow brick. A hole is drilled in the hollow brick. A mesh-shaped bushing is inserted in the hole. A chemical anchoring product is injected in the bushing, coming out of the holes of the mesh and penetrating the cavities of the hollow brick. The anchoring screw is inserted in the bushing and held by the chemical anchoring product. The system also provides for a flexible sheath disposed around the bushing in order to hold the chemical anchoring product, given the fact that the cavities of the hollow bricks are very large and therefore a large amount of chemical anchoring product would be necessary to fill the cavities of the brick. Undoubtedly, the provision of the flexible sheath impairs the adhesion of the chemical anchoring product to the brick.

Evidently, the hollow brick is a monolithic block that is not suitable for being integrated in the insulating coating of a wall. Therefore, the aforementioned document does not provide any precepts on a fixing device for shutter hinges that is suitable for adjusting to the thickness of the insulating coating.

The purpose of the present invention is to eliminate the drawbacks of the prior art by providing a system used for installing lightweight loads on the coatings of external walls in buildings, which is reliable, safe, precise and creates no problem or difficulty for the operator.

These purposes are achieved according to the invention, with the characteristics claimed in the independent claim 1.

Advantageous embodiments of the invention appear from the dependent claims.

The system used to fix lightweight loads on insulating coatings of external walls in buildings according to the present invention comprises:
- a fixing device comprising a base intended to be fixed to a masonry wall and a support that protrudes externally from the said base, the said fixing device being covered with an insulating coating applied on the said masonry wall,
- a supporting means intended to support the said lightweight load, the said supporting means being fixed to the said support of the fixing device,
- a bushing intended to be inserted in a hole obtained in the said insulating coating and in the said support, and
- a chemical anchoring product injected in the said bushing in order to hold the supporting means inserted in the bushing.

The support is a separate element from the base. The support is fitted in the base. The support comprises a grid composed of a plurality of cells, wherein the cells in communication with the hole of the support wherein the bushing is inserted are completely filled with the said chemical anchoring product.

The advantages of the system of the invention are evident. Given the fact that it comprises two physically separate elements (base and support) that are assembled together, the system is versatile and adjusts to any type of coating thickness. Moreover, the special grid structure of the support avoids the formation of a threaded hole on a metal plate for screwing a supporting means of the lightweight load. Additionally, the system of the invention does not use any fixing devices with pre-formed holes and therefore avoids the need to use disposable fittings to adjust the position of the fixing devices. Also, the structure of the cells in the support grid allows for completely filling the support cells with the said chemical anchoring product, thus avoiding the use of sheaths to hold the chemical anchoring product.

Additional characteristics of the invention will appear clearer from the detailed description below, which refers to merely illustrative, not limiting, embodiments, which are illustrated in the attached technical drawings, wherein:
Fig. 1 is an exploded perspective view of the two parts of the fixing device according to the invention;
Fig. 2 is a perspective view of four fixing devices according to the invention applied to a wall in proximity to the opening of a window;
Fig. 2A is an enlarged view of a detail of Fig. 2;
Fig. 3 is a perspective view of the wall of Fig. 2 whereon a coating is applied and holes are drilled for supporting devices of lightweight loads;
Fig. 4 is a perspective view of the fixing device according to the invention with a hole and an exploded view of a bushing;

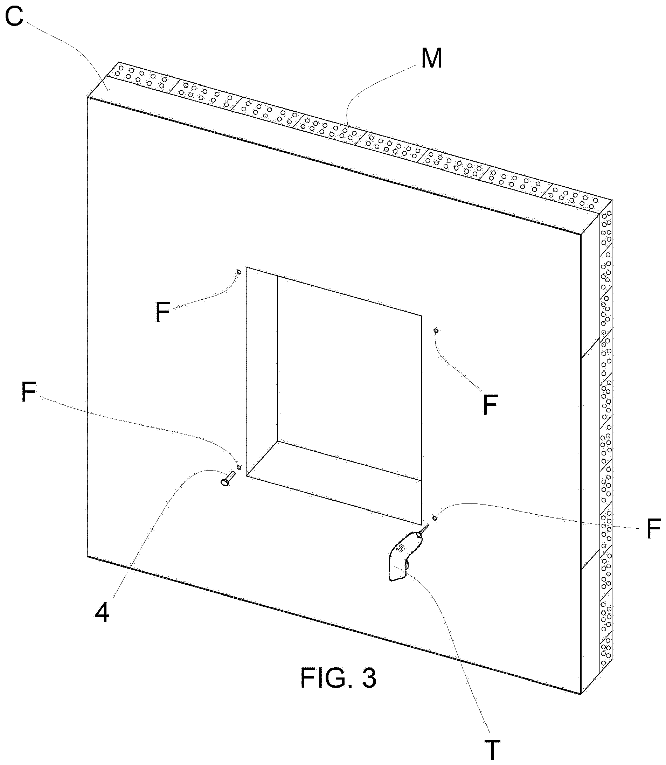

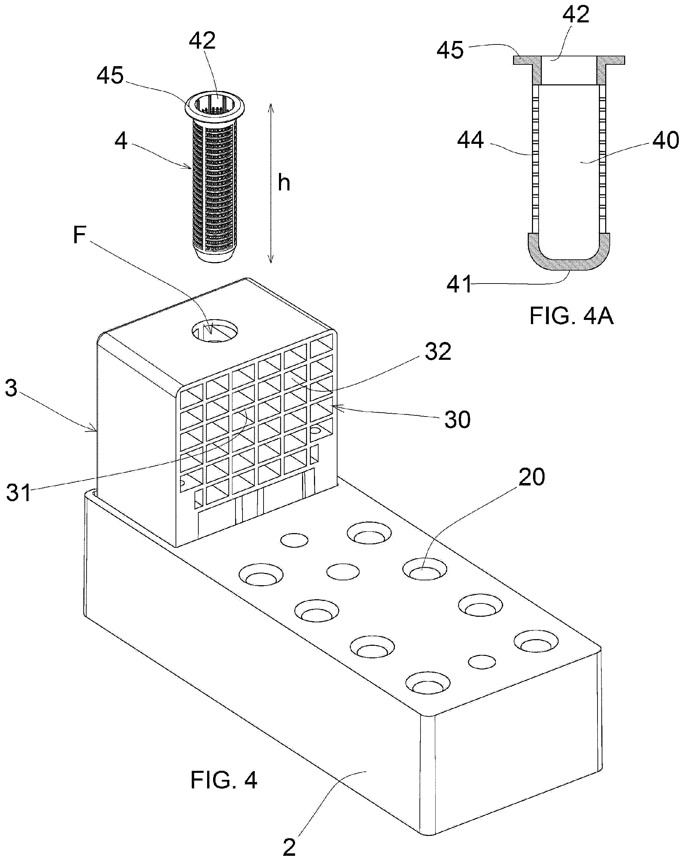

Fig. 3 is an axial view of the bushing of Fig. 4;

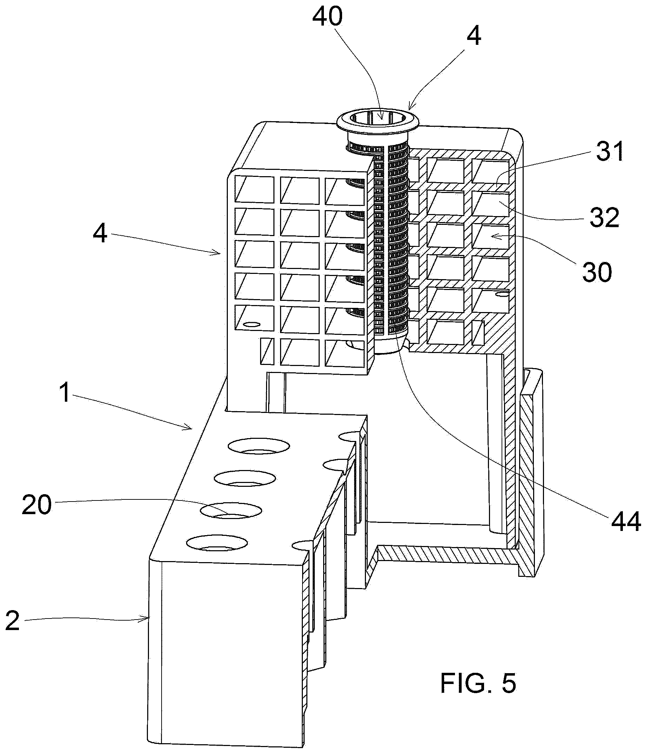

Fig. 5 is a partially sectional perspective view of the fixing device of Fig. 4 with the bushing in assembled condition;

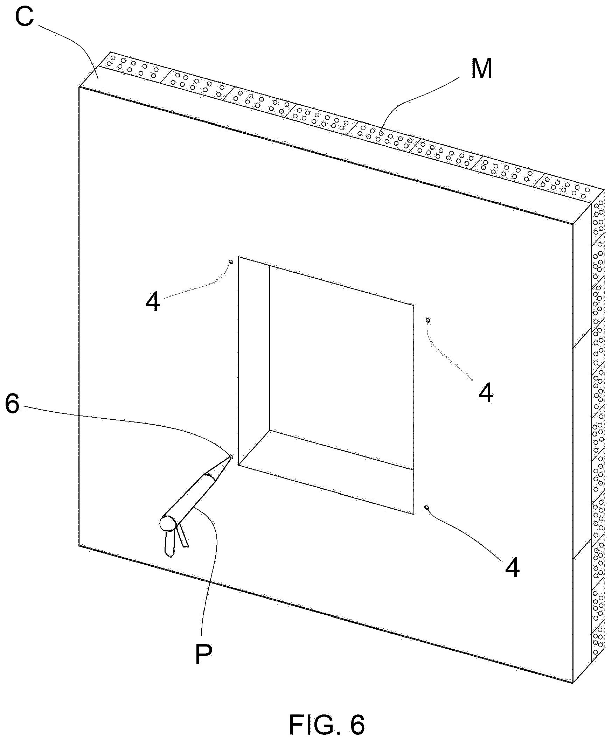

Fig. 6 is the same view as Fig. 3, except in that it shows the injection step of a chemical anchoring product in the bushings of the device according to the invention;

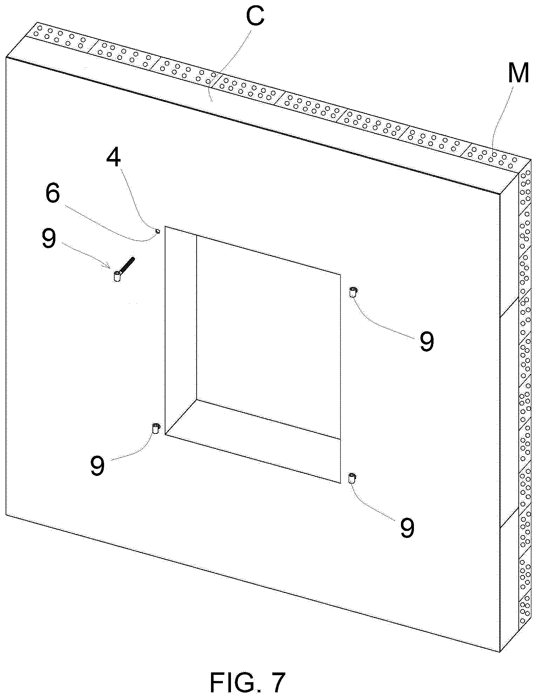

Fig. 7 is the same view as Fig. 6, except in that it shows the mounting of a supporting device composed of a hinge for shutters in the bushing of the device according to the invention;

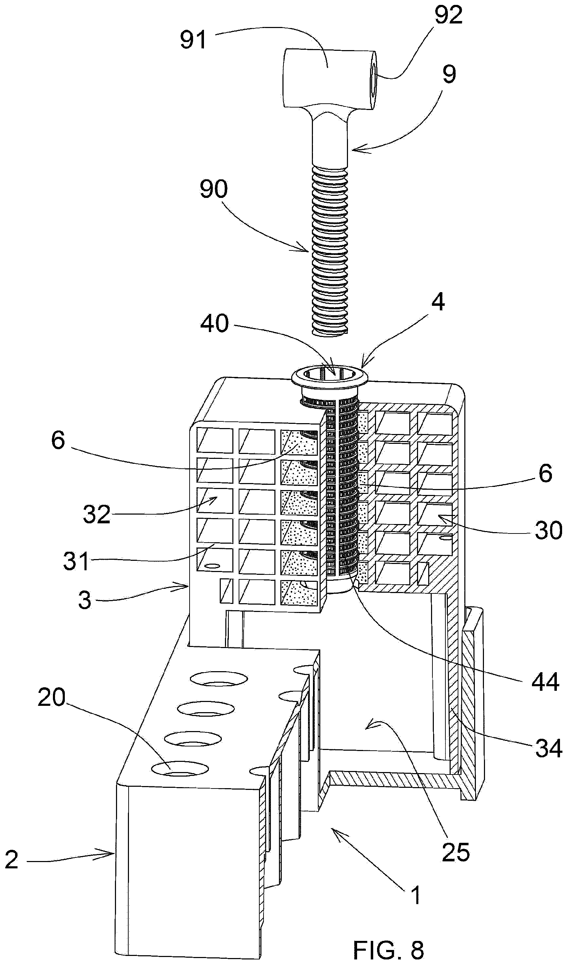

Fig. 8 is the same view as Fig. 5, which is an exploded view of a hinge inserted in the bushing of the device according to the invention, after injecting resin.

Referring to the figures, the fixing device of the invention is disclosed, being generally indicated with reference numeral (1).

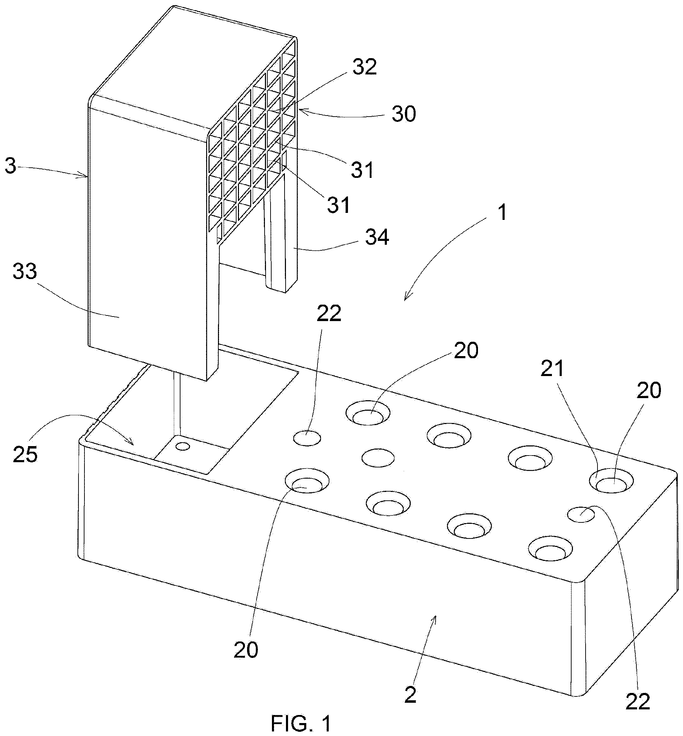

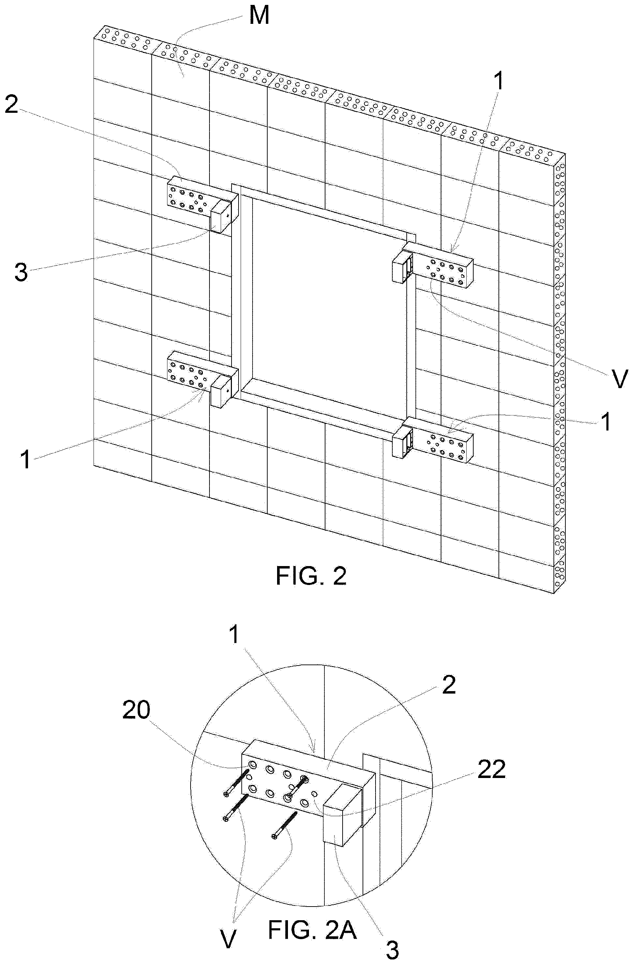

Now referring to Fig. 1, the fixing device (1) comprises a base (2) intended to be fixed to a masonry wall (M) (Fig. 2) and a support (3) intended to fix a supporting device (9) (Fig. 8). The supporting device (9) is intended to support a lightweight load. The supporting device (9) can be, for example, a hinge used to revolvingly support the shutter of a window.

Still referring to Fig. 1, the base (2) is shaped as a box parallelepiped block molded from plastic material. The base (2) comprises a plurality of through holes (20) intended to receive screws (V) (Fig. 2A) for fixing the base (2) to the masonry wall (M).

The holes (20) of the base have a flared edge (21) in order to receive the head of the fixing screw (V). Preferably the holes (20) are disposed on two parallel rows.

Holes (22) are provided between the two rows of holes (20) for the screws in order to inject polyurethane foam that sets on the wall (M) and avoids the formation of empty spaces between the wall (M) and the base (2) of the fixing device. This avoids the formation of condensation between the wall (M) and the base (2) of the fixing device.

The base (2) comprises a housing (25) suitable for receiving the support (3) in such manner that the support (3) externally protrudes from the base (2) and the base (2) and support (3) assembly is shaped as an "L". The fact that the support (3) is a separate part from the base (2) and is coupled with the base (2) during assembly makes the device (1) extremely versatile. In fact the base (2) is the same for any device, whereas the support (3) is made with different height according to the thickness of the coating to be obtained.

The support (3) has a substantially parallelepiped box shape and comprises a grid (30) made of a plurality of ribs (31) that cross in order to form a plurality of cells (32). Advantageously, the grid (30) comprises at least 15 cells. Each cell (32) has a rectangular or square cross-section, in which the longer side of the rectangle or the side of the square is shorter than 20 mm. The cells (32) are disposed in rows and columns in a matrix, which comprises at least four rows and four columns.

Fig. 1 shows a grid (30) with a matrix of 6 rows by 6 columns, i.e. a grid with 36 rectangular cells, in which the longer side of the rectangle is shorter than 15 mm and the shorter side is shorter than 10 mm.

The grid (30) of the support is connected to two wings (33, 34) that are fitted into the housing (25) of the base. This type of coupling between the base (2) and the support (3) allows for using interchangeable supports with different size for the same type of base, with height specifically suitable and compatible with the thickness of the coating to be applied on the masonry wall (M).

Referring to Fig. 2, four fixing devices (1) are fixed to a masonry wall (M) in proximity to the four corners of a window in such manner that the supports (3) orthogonally protrude outwards with respect to the masonry wall (M). Firstly the bases (2) of the supports are fixed to the masonry wall (M) with screws (V). Then polyurethane foam is injected in the holes (22) to avoid the formation of air spaces.

Referring to Fig. 3, an insulating coating (C) is applied on the masonry wall (M) in such manner to cover the fixing devices (1). As it is known, an insulating coating comprises insulating panels fixed to the wall, a mesh disposed on the insulating panels and plaster disposed on the mesh and on the insulating panels. Generally, the insulating panels are made of polyurethane foam and the mesh is made of plastic material. It must be noted that the support (3) of the device (1) is chosen with a slightly lower height than the thickness of the coating (C) to be obtained.

Now the operator uses a drill (T) to make four holes (F) in the insulating coating (C) and in the supports (3) of the fixing devices. The holes (F) are proximal to the corners of the window, i.e. in the position where the hinges (9) of the shutters are to be fixed and therefore in correspondence of the supports (3) of the fixing devices.

Referring to Fig. 4, the drill bit makes the hole (F) in the support (3) of the fixing device and perforates a plurality of ribs (31) of the grid (30). Consequently, the hole (F) crosses a plurality of rectangular cells (32) of the grid (30) of the support.

As shown in Figs. 3 and 4, after drilling four holes (F) in the insulating coating (C) and in the supports (3) of the fixing devices (1), bushings (4) are inserted in the holes (F). The bushings (4) are inserted by pressure in the holes (F).

As shown in Figs. 4 and 4A, the bushing (4) has a cylindrical shape with a height (h) that is substantially identical or slightly higher than the height of the grid (30) of the support of the fixing device. The bushing (4) is internally empty and comprises an internal chamber (40), a closed bottom wall (41), an upper opening (42) and a perforated or mesh-shaped lateral wall (44). The bushing (4) is provided with a collar (45) that protrudes externally from the upper opening of the bushing in order to be stopped against the edge of the hole (F). The collar (45) acts as stop for the bushing (4).

Fig. 5 shows the bushing (4) inserted in the hole (F) of the support of the fixing device. The bushing (4) crosses a plurality of ribs (31) of the support grid and the holes of the perforated walls (44) of the bushing communicate with a plurality of cells (31) of the support grid.

Referring to Fig. 6, a chemical anchoring product (6), such as hybrid resin with addition of Portland cement, is injected in each bushing (4) with a gun (P) comprising a cylinder-piston assembly.

Referring to Fig. 8, the chemical anchoring product (6) enters the internal chamber (40) of the bushing and comes out through the holes of the perforated lateral wall (44) of the bushing, thus occupying a plurality of cells (32) of the support grid. The cells (32) are completely filled with the said chemical anchoring product (6). In the example of Fig. 8, twelve cells (32) are completely filled with the said chemical anchoring product. In this way, the bushing (4) is firmly anchored to the support (3). The provision of the grid (30) formed of a plurality of small cells (31) allows for saving on the chemical anchoring product, guarantees a higher rigidity of the support (3) and provides a better anchoring of the bushing (4). In fact, if the bushing was directly inserted in a hollow brick as disclosed in EP1331406, a large amount of resin would be necessary to fill the large cells of the hollow brick and the bushing would not hold strong.

As shown in Figs. 7 and 8, after injecting the chemical anchoring product (6), the hinge (9) is inserted in the bushing and the chemical anchoring product (6) provides a good hold of the hinge (9).

In particular, the hinge (9) comprises a threaded stem (90) and a sleeve (91) provided with a hole (92) with orthogonal axis with respect to the axis of the threaded stem (90). The hole (92) of the hinge is intended to be disposed with vertical axis in order to receive a pin of a window shutter.

In such a case, the thread of the threaded pin (90) is held in the chemical anchoring product (6) disposed in the internal chamber (40) of the bushing and the chemical anchoring product (6) holds the threaded stem (90) of the hinge, thus preventing the extraction of the hinge. As mentioned above, the chemical anchoring product (6) is held by the cells (32) of the grid, which are completely filled with chemical anchoring product.

Numerous variations and modifications can be made to the present embodiment of the invention, within the reach of an expert of the field, while still falling within the scope of the invention.

## Claims

1. Fixing system of lightweight loads on insulating coatings of external walls in buildings, comprising:
- a fixing device (1) comprising a base (2) intended to be fixed to a masonry wall (M) and a support (3) that protrudes externally from the said base (2), the said fixing device (1) being covered with an insulating coating (C) applied on the said masonry wall (M), and
- a supporting means (9) intended to support the said lightweight load, the said supporting means (9) being fixed to the said support (3) of the fixing device,
**characterized in that**
the said fixing system also comprises:
- a bushing (4) suitable for being inserted in a hole (F) obtained in the said insulating coating (C) and in the said support (3), and
- a chemical anchoring product (6) injected in the said bushing in order to hold the said supporting means inserted in the said bushing,
wherein
the said support (3) is a separate element from the base (2) that is fitted into the base (2), and
the said support (3) comprises a grid (30) composed of a plurality of cells (32), in which the cells (32) in communication with the hole (F) of the support wherein the bushing (4) is inserted are completely filled with the said chemical anchoring product (6).

2. The fixing system of claim 1, wherein the said base (2) comprises a housing (25) and the said support (3) comprises two wings (33, 34) that are fitted into the said housing (25) of the base.

3. The fixing system of any one of the preceding claims, wherein the said base (2) and the said support (3) of the fixing device are box parallelepiped blocks suitable for being assembled and obtained from molding plastic material.

4. The fixing system of any one of the preceding claims, wherein the said cells (32) are disposed in a matrix with rows and columns, having at least four rows and four columns.

5. The fixing system of claim 1, wherein the said grid (30) comprises at least 15 cells.

6. The fixing system of claim 1 or 2, wherein each cell (32) has a rectangular or square shape in cross-section, with the longer side shorter than 20 mm.

7. The fixing system of any one of the preceding claims, wherein the said bushing (4) has a perforated lateral wall (44) in order to allow the chemical anchoring product (6) that holds the support (3) to come out.

8. The fixing system of claim 7, wherein the said perforated lateral wall (44) of the bushing consists in a mesh.

9. The fixing system of any one of the preceding claims, wherein the said chemical anchoring product (6) is hybrid resin with addition of Portland cement.

10. The fixing system of any one of the preceding claims, wherein the said supporting means (9) comprise a threaded stem (90) that is screwed in the said chemical anchoring product (6).

11. The fixing system of claim 10, wherein the said supporting means (9) comprise a sleeve (91) provided with a hole (92) with orthogonal axis with respect to the axis of the threaded stem (90), the hole (92) of the sleeve being intended to be disposed with vertical axis in order to receive a pin of a window shutter.

12. The fixing system of any one of the preceding claims, also comprising screw means (V) for fixing the said base (2) of the fixing device to the masonry wall (M) and injecting polyurethane foam in the holes (20) of the said base of the fixing device.

## Patentansprüche

1. Befestigungssystem für leichte Lasten auf Isolierbeschichtungen von Gebäudeaußenwänden, umfassend:
- eine Befestigungsvorrichtung (1), umfassend eine Basis (2), die dazu bestimmt ist, auf einer Mauerwerkwand (M) befestigt zu werden, und eine Stütze (3), die nach außen aus der Basis (2) auskragt, wobei die Befestigungsvorrichtung (1) mit einer auf der Mauerwerkwand (M) aufgebrachten Isolierbeschichtung (C) bedeckt ist, und
- Stützmittel (9), das dazu geeignet ist, die leichte Last zu tragen, wobei das Stützmittel (9) an der Stütze (3) der Befestigungsvorrichtung befestigt ist,
**dadurch gekennzeichnet, dass**
das Befestigungssystem ferner Folgendes umfasst:
- eine Buchse (4), die dazu bestimmt ist, in eine Bohrung (F) eingesetzt zu werden, die in der Isolierbeschichtung (C) und in der Stütze (3) herausgearbeitet ist, und
- ein chemisches Verankerungsmittel (6), die in die Buchse eingespritzt wird, um das in der Buchse eingesetzte Stützmittel festzuhalten, wobei
die Stütze (3) ein von der Basis (2) getrenntes Element ist, das in die Basis (2) eingerastet wird, und
die Stütze (3) ein Netz (30) umfasst, das aus einer Mehrzahl von Zellen (32) besteht, wobei die Zellen (32), die mit der Bohrung (F) der Stütze in Verbindung stehen, in die die Buchse (4) eingesteckt ist, vollständig mit dem chemischen Verankerungsmittel (6) gefüllt sind.

2. Befestigungssystem nach Anspruch 1, wobei die Basis (2) einen Sitz (25) umfasst und die Stütze (3) zwei Flügel (33, 34) umfasst, die in den Sitz (25) der Basis eingerastet sind.

3. Befestigungssystem nach einem der vorstehenden Ansprüche, wobei die Basis (2) und die Stütze (3) der Befestigungsvorrichtung kastenförmige Quader sind, die miteinander verbindbar und durch Formung aus Kunststoff erhalten sind.

4. Befestigungssystem nach einem der vorstehenden Ansprüche, wobei die Zellen (32) matrixartig in Reihen und Spalten angeordnet sind und mindestens vier Reihen sowie mindestens vier Spalten umfassen.

5. Befestigungssystem nach Anspruch 1, wobei das Netz (30) mindestens 15 Zellen umfasst.

6. Befestigungssystem nach Anspruch 1 oder 2, wobei jede Zelle (32) im Querschnitt eine rechteckige oder quadratische Form mit einer Längsseite von höchstens 20 mm aufweist.

7. Befestigungssystem nach einem der vorstehenden Ansprüche, wobei die Buchse (4) eine gelochte Seitenwand (44) aufweist, um das Austreten des chemischen Verankerungsmittels (6) zu ermöglichen, das die Stütze (3) hält.

8. Befestigungssystem nach Anspruch 7, wobei die gelochte Seitenwand (44) der Buchse aus einem Netz besteht.

9. Befestigungssystem nach einem der vorstehenden Ansprüche, wobei das chemische Verankerungsmittel (6) ein Hybridharz ist, dem Portland-Zement zugesetzt wird.

10. Befestigungssystem nach einem der vorstehenden Ansprüche, wobei die Stützmittel (9) einen Gewindeschaft (90) umfassen, der in das chemische Verankerungsmittel (6) eingeschraubt wird.

11. Befestigungssystem nach Anspruch 10, wobei die Stützmittel (9) eine Muffe (91) mit einer Bohrung (92) umfassen, deren Achse rechtwinklig in Bezug auf die Achse des Gewindeschaftes (90) verläuft, wobei die Bohrung (92) der Muffe dazu bestimmt ist, vertikalachsig angeordnet zu werden, um den Bolzen eines Fensterladens aufzunehmen.

12. Befestigungssystem nach einem der vorstehenden Ansprüche, umfassend ferner Schraubenmittel (V) zur Befestigung der Basis (2) der Befestigungsvorrichtung an der Mauerwerkwand (M) und das Einspritzen von Polyurethan in die Bohrungen (20) der Basis der Befestigungsvorrichtung.

## Revendications

1. Système de fixation de charges légères sur des revêtements isolants de parois extérieures de bâtiments, comprenant :
- un dispositif de fixation (1) comprenant une base (2) destinée à être fixée à une paroi de maçonnerie (M) et un support (3) qui déborde à l'extérieur de ladite base (2), ledit dispositif de fixation (1) étant recouvert d'un revêtement isolant (C) appliqué sur ladite paroi de maçonnerie (M), et
- un moyen de support (9) apte à supporter ladite charge légère, ledit moyen de support (9) étant fixé au dit support (3) du dispositif de fixation,
**caractérisé en ce que**
ledit système de fixation comprend également :
- une goupille (4) destinée à être introduite dans un orifice (F) réalisé dans ledit revêtement isolant (C) et dans dit support (3), et
- un agent chimique d'ancrage (6) injecté dans ladite goupille pour permettre la prise du dit moyen de support qui est introduit dans ladite goupille,
où
ledit support (3) est un élément séparé de la base (2) qui est accouplé à encastrement dans la base (2), et
ledit support (3) comprend un réticule (30) constitué d'une pluralité de cellules (32), où les cellules (32) en communication avec l'orifice (F) du support où la goupille (4) est insérée sont complètement remplies du dit agent chimique d'ancrage (6).

2. Système de fixation selon la revendication 1, où ladite base (2) comprend un logement (25) et ledit support (3) comprend deux ailettes (33, 34) qui sont couplées à encastrement dans dit logement (25) de la base.

3. Système de fixation selon l'une quelconque des revendications précédentes, où ladite base (2) et ledit support (3) du dispositif de fixation sont des blocs parallélépipèdes en forme de boîtier que l'on peut assembler entre eux et obtenus par moulage de matériel plastique.

4. Système de fixation selon l'une quelconque des revendications précédentes, où lesdites cellules (32) sont disposées à matrice avec des lignes et des colonnes, ayant au moins quatre lignes et au moins quatre colonnes.

5. Système de fixation selon la revendication 1, où ledit réticule (30) comprend au moins 15 cellules.

6. Système de fixation selon la revendication 1 ou 2, où chaque cellule (32) a, en section transversale, une forme rectangulaire ou carrée, avec le côté le plus long inférieur à 20 mm.

7. Système de fixation selon l'une quelconque des revendications précédentes, où ladite goupille (4) a une paroi latérale percée (44) pour permettre l'écoulement de l'agent chimique d'ancrage (6) qui fait prise sur le support (3).

8. Système de fixation selon la revendication 7, où ladite paroi latérale percée (44) de la goupille est composé par un filet.

9. Système de fixation selon l'une quelconque des revendications précédentes, où ledit agent chimique d'ancrage (6) est une résine hybride additionnée de ciment Portland.

10. Système de fixation selon l'une quelconque des revendications précédentes, où lesdits moyens de support (9) comprennent une tige filetée (90) qui se visse dans ledit agent chimique d'ancrage (6).

11. Système de fixation selon la revendication 10, où lesdits moyens de support (9) comprennent un manchon (91) ayant un orifice (92) avec axe orthogonal par rapport à l'axe de la tige filetée (90), l'orifice (92) du manchon étant destiné à être disposé avec axe vertical pour accueillir un pivot d'une persienne d'une fenêtre.

12. Système de fixation selon l'une quelconque des revendications précédentes, comprenant également des moyens à vis (V) pour la fixation de ladite base (2) du dispositif de fixation à la paroi de maçonnerie (M) et l'injection de polyuréthane expansé dans des orifices (20) de ladite base du dispositif de fixation.
